# EUROPEAN PATENT SPECIFICATION

(11) **EP 4 352 533 B1**
(45) Date of publication and mention of the grant of the patent: **18.11.2026**
(21) Application number: 22735654.0
(22) Date of filing: 02.06.2022
(51) Int. Cl.: G01S 5/02

(54) **POSITIONING SYSTEM, COMPUTER-IMPLEMENTED POSITIONING METHOD, COMPUTER PROGRAM AND NON-VOLATILE DATA CARRIER**
POSITIONIERUNGSSYSTEM, COMPUTERIMPLEMENTIERTES POSITIONIERUNGSVERFAHREN, COMPUTERPROGRAMM UND NICHTFLÜCHTIGER DATENTRÄGER
SYSTÈME DE POSITIONNEMENT, PROCÉDÉ DE POSITIONNEMENT MIS EN OEUVRE PAR ORDINATEUR, PROGRAMME INFORMATIQUE ET SUPPORT DE DONNÉES NON VOLATILE

(30) Priority: 10.06.2021 SE 2150732
(43) Date of publication of application: 17.04.2024
(73) Proprietor: DeLaval Holding AB, 147 21 Tumba (SE)
(72) Inventor: BAHLENBERG, Peter, 147 21 Tumba (SE); ERIKSSON, Göran, 147 21 Tumba (SE); UMEGÅRD, Anders, 147 21 Tumba (SE)
(74) Representative: DeLaval International AB
(86) International application number: PCT/SE2022/050541
(87) International publication number: WO 2022/260576

(56) References cited:
- WO-A1-2019/226103
- US-A1- 2015 237 833
- US-A1- 2021 165 977

## Description

### TECHNICAL FIELD

The present invention relates generally to positioning of mobile entities. Especially, the invention relates to a system according to the preamble of claim 1 and a corresponding computer-implemented method. The invention also relates to a computer program and a non-volatile data carrier storing such a computer program.

### BACKGROUND

In today's businesses, agriculture, sports and leisure various kinds of positioning systems play an increasingly important role. Naturally, in such systems, high energy efficiency, high accuracy and high capacity are generally desired traits. Nevertheless, it is not a trivial task to optimize the design of a positioning system within a given specification. This is especially the case if the movement patterns of the entities to positioned is unknown beforehand.

WO 2006/022548 describes a system for locating at least one animal in a predetermined area, provided with at least one label which is designed to be attached to or in the at least one animal. The label is provided with a transmitter for transmitting an ultra-wide band signal. At least one receiver which is placed in or adjacent the area and is designed to receive the ultra-wide band signal of the transmitter of the at least one label. A signal processing device is connected to or integrated with the at least one receiver for locating the at least one label on the basis of the ultra-wide band signal received by the at least one receiver on the basis of, for instance, delay time and/or reception angle.

WO 2019/226103 describes another system for positioning animal tags comprising a central control unit and a set of base stations.

US 2021/165977 describes a positioning method using ultra-wide band signals between tags and readers, and activation of an inertial sensor in the tag upon certain conditions.

Thus, a positioning system, as such, is known where mobile transmitters are used to keep track the individuals of a group of animals. However, even though the ultra-wide radio band in general is relatively spectrum-efficient and provides a high positioning precision, the technology has its limitations, for example with respect to the maximum number of trackable transmitters per unit time and unit area. In areas with crowded zones it may therefore be challenging to arrange the system's receivers/base stations such that an adequate performance is attained over the entire area.

### SUMMARY

The object of the present invention is therefore to offer a solution that solves the above problem and provides reliable positioning also in areas that include one or more crowded zones. According to one aspect of the invention, the object is achieved by a positioning system including a central unit and a set of at least three base stations. The central unit is configured to receive identity and timing information; and based thereon determine a respective position in an area of each entity in a set of entities. Each entity carries a respective mobile unit repeatedly transmitting a radio message including the identity information. Each of the base stations is arranged to receive the radio messages from the mobile units in the area; and based thereon, forward the identity and timing information to the central unit via at least one transmission line. During a measurement period, the central unit is configured to register respective positions of the entities in the set of entities in the form of a respective trace for each mobile unit. The central unit is further configured to check if an alarm criterion is fulfilled, which alarm criterion is considered to be fulfilled if, during the measurement period, a first predefined number of the traces are interrupted during a first threshold interval, and the first predefined number of traces are interrupted in a first zone of the area, which first zone exceeds a first threshold size. If the alarm criterion is considered to be fulfilled generate a capacity alarm with respect to the first zone. Here, the term "trace" is understood to designate a movement pattern represented by consecutively updates of the entity's position.

This positioning system is advantageous because it automatically identifies hotspots, where the system has inadequate capacity to track the entities. Hence, constructive measures may be taken to compensate for this deficiency, for example by adding and/or relocating at least one base station.

According to one embodiment of this aspect of the invention, the central unit is further configured to indicate a location for a new base station to increase a capacity of the positioning system in the first zone. Here, the location for the new base station is at a geometrical middle point between a first base station and a second base station in the set of base stations, which first and second base stations are located closer to the first zone than any other base station in the set of base stations. Thus, a system designer is straightforwardly guided to a solution of the inferior capacity in the first zone.

According to another embodiment of this aspect of the invention, the central unit is further configured to check if an overcapacity criterion is fulfilled. The overcapacity criterion is considered to be fulfilled if, during the measurement period less than a second predefined number of the traces cross a second zone of the area, and none of the second predefined number of the traces is interrupted in the second zone, which second zone exceeds a second threshold size. If the overcapacity criterion is considered to be fulfilled, the central unit is configured to generate an overcapacity indicator with respect to the second zone. Thereby, any redundant base stations may be removed, or relocated.

According to yet another embodiment of this aspect of the invention, the central unit is further configured to identify one of the base stations in the set of base stations as a candidate base station to be removed from the positioning system. The candidate base station is here a base station in the set of base stations being located closer to the second zone than any other base station in the set of base stations. Thus, the system designer is straightforwardly guided to a solution of the superfluous capacity in the second zone. Consequently, hardware costs may be saved, or the removed base station may be inserted to compensate for any capacity deficit elsewhere in the system.

Preferably, the mobile units in the set of mobile units are configured to transmit the radio message in the ultra-wide band (UWB). Namely, this frequency band allows for the transmission of a large amount of signal energy without interfering with conventional narrowband and carrier wave transmission in the same frequency band. The UWB offers data communication capability while using extremely little energy and enabling accurate location.

According to still another embodiment of this aspect of the invention, the entities in the set of entities are livestock animals. Namely, for efficiency and health-care reasons, today's farming demands efficient and reliable tracking of all animals at all times.

According to another aspect of the invention, the object is achieved by a computer-implemented positioning method, which is performed in at least one processor of a positioning system. The method involves receiving, via at least one transmission line, identity and timing information from at least three base stations in a set of base stations arranged to receive radio messages from mobile units, each of which is carried by a respective entity in a set of entities and repeatedly transmits a radio message including the identity information. It is presumed that the entities move in an area, and the base stations forward the identity and timing information. The method involves determining, based on the identity and timing information, a respective position in the area of each entity in the set of entities.

Moreover, during a measurement period, the method involves registering respective positions of the entities in the set of entities in the form of a respective trace for each mobile unit, and checking if an alarm criterion is fulfilled. The alarm criterion is considered to be fulfilled if, during the measurement period, a first predefined number of the traces are interrupted during a first threshold interval, and the first predefined number of traces are interrupted in a first zone of the area, which first zone exceeds a first threshold size. If the alarm criterion is considered to be fulfilled, the method involves generating a capacity alarm with respect to the first zone. The advantages of this method, as well as the preferred embodiments thereof, are apparent from the discussion above with reference to the proposed system.

According to a further aspect of the invention, the object is achieved by a computer program loadable into a non-volatile data carrier communicatively connected to a processor of a positioning system. The computer program includes software for executing the above method when the program is run on the processor.

According to another aspect of the invention, the object is achieved by a non-volatile data carrier containing the above computer program.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figure 1: shows a schematic overview of a positioning system according to one embodiment of the invention;
- Figure 2: exemplifies how a number of interrupted entity traces during a measurement period may be used to trigger a capacity alarm according to one embodiment of the invention;
- Figure 3: illustrates how a number of interrupted entity traces per unit area may be used to trigger the capacity alarm according to one embodiment of the invention;
- Figure 4: shows a block diagram of a central unit according to one embodiment of the invention;
- Figure 5: shows a block diagram of a base station according to one embodiment of the invention;
- Figure 6: shows a block diagram of a mobile unit according to one embodiment of the invention; and
- Figure 7: illustrates, by means of a flow diagram, the general method according to the invention.

### DETAILED DESCRIPTION

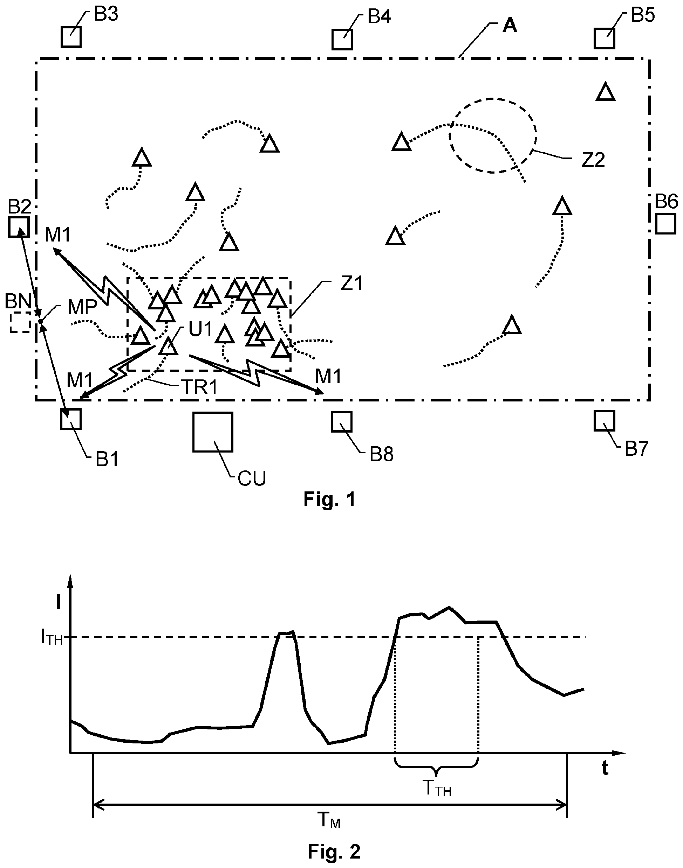

Figure 1 shows a schematic overview of the positioning system according to one embodiment of the invention. The positioning system contains a central unit CU and a set of at least three base stations B1, B2, B3, B4, B5, B6, B7 and B8.

The central unit CU is configured to receive identity and timing information; and based thereon determine a respective position in an area A of each entity in a set of entities. Each of the entities carries a respective mobile unit U1 that repeatedly transmits a radio message M1 including the identity information. Technically, of course, the identity information specifies a unique identity of the *mobile unit* U1 from which the radio message M1 is trans-mitted. However, based on an identity conversion table it is trivial to derive a unique entity identity from the mobile unit identity.

Each of the base stations B1, B2, B3, B4, B5, B6, B7 and B8 respectively is arranged to receive the radio messages M1 from the mobile units U1 in the area A. Based thereon, each base station is further configured to forward the identity and timing information to the central unit CU via at least one transmission line.

During a measurement period, the central unit CU is configured to register respective positions of the entities in the set of entities in the form of a respective trace TR1 for each mobile unit U1. In Figure 1, each mobile unit U1 is represented by a triangle symbol, and the traces are indicated by means of a respective dotted line attached to each triangle symbol.

Referring now to Figure 2, we see a diagram showing time t along the horizontal axis and a number I of interrupted traces TR1 along the vertical axis. Figure 2 exemplifies one embodiment of the invention according to which the number I of interrupted traces TR1 during the measurement period T_{M} is used to trigger a capacity alarm.

The central unit CU is configured to check if an alarm criterion is fulfilled. The alarm criterion is considered to be fulfilled if, during the measurement period T_{M} a first predefined number I_{TH} of the traces TR are interrupted during a first threshold interval T_{TH}.

Moreover, to fulfil the alarm criterion, the predefined number I_{TH} of traces TR must be interrupted in a first zone Z1 of the area A, which first zone Z1 exceeds a first threshold size A_{TH}. If the alarm criterion is considered to be fulfilled, the central unit CU is configured to generate a capacity alarm CA(Z1) with respect to the first zone Z1.

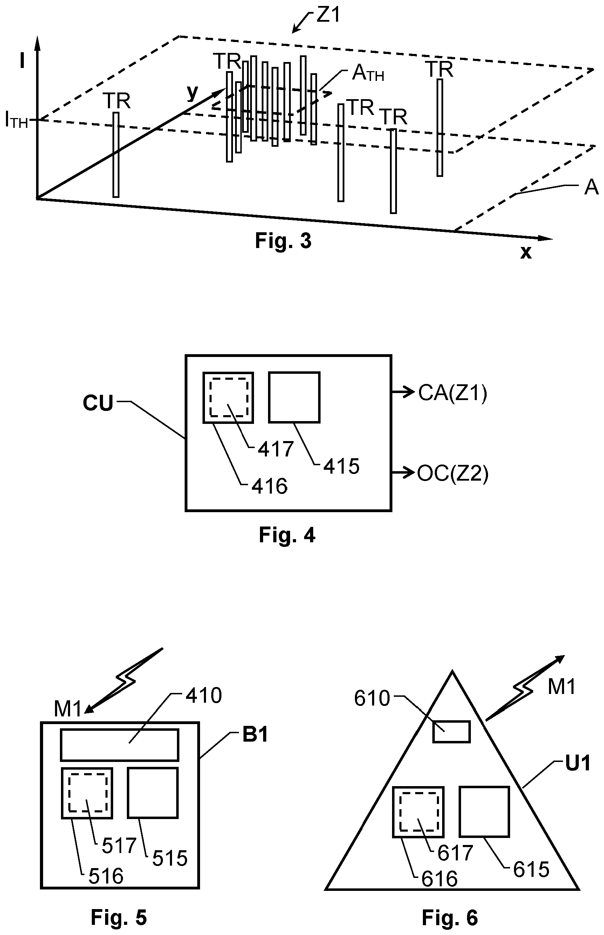

Figure 3 shows a three-dimensional graph that illustrates, schematically, the number of interrupted traces I along the vertical axis, and the area A along the horizontal plane. Here, at least the first predefined number I_{TH} of the traces TR are interrupted in the first zone Z1 during the measurement period T_{M}. The first zone Z1 also has a size exceeding the first threshold size A_{TH}.

In other words, the alarm criterion combines a first condition concerning the number of interrupted traces I with a second condition concerning the size of the zone in which said traces are interrupted. Thus, any hotspots, where the system's has inadequate capacity to track the entities can be identified in a straightforward manner.

According to one embodiment of the invention, the entities in the set of entities are livestock animals. Namely, for efficiency and animal-health reasons, today's farming accurate tracking of each livestock animal at all times. In farm buildings and other areas where large herds are held, it is not uncommon that certain areas become especially crowded, at least periodically. Feeding stations and narrow passages constitute examples of areas where crowding may occur. These places are likewise potential hotspots, i.e. zones in which the positioning system may suffer from insufficient tracking capacity. Typically, this is also where the most accurate tracking is needed. Therefore, the invention is especially useful in connection with positioning livestock animals.

Referring again to Figure 1, according to one embodiment of the invention, the central unit CU is further configured to indicate a location for a new base station BN to increase a capacity of the positioning system in the first zone Z1. The location is here at a geometrical middle point MP between a first base station B1 and a second base station B2 in the set of base stations, which first and second base stations B1 and B2 respectively are located closer to the first zone Z1 than any other base station in the set of base stations.

Naturally, identifying the above-mentioned hotspots is very important. However, it may also be relevant to identify any base stations that are redundant, i.e. base stations being unnecessary to provide a sufficient tracking capacity.

According to one embodiment of the invention, the central unit CU is therefore further configured to check if an overcapacity criterion is fulfilled. The overcapacity criterion is considered to be fulfilled if, during the measurement period T_{M} less than a second predefined number of the traces TR1 cross a second zone Z2 of the area A. In order for the overcapacity criterion to be fulfilled, none of the second predefined number of the traces TR1 shall be interrupted in the second zone Z2 either, which second zone exceeds a second threshold size.

If the overcapacity criterion is considered to be fulfilled, the central unit CU is configured to generate an overcapacity indicator OC(Z2) with respect to the second zone Z2.

Figure 4 shows a block diagram of the central unit CU according to one embodiment of the invention, where the capacity alarm CA(Z1) and the overcapacity indicator OC(Z2) are presented as output signals.

According to one embodiment of the invention, in response to the overcapacity indicator OC(Z2), the central unit CU is also configured to identify one of the base stations in the set of base stations as a candidate base station to be removed from the positioning system. Figure 1 exemplifies the base station B5 as such a candidate base station, which candidate base station B5 is a base station in the set of base stations being located closer to the second zone Z2 than any other base station in the set of base stations.

According to one embodiment of the invention, each mobile unit U1 in the set of mobile units is configured to transmit the radio message M1 to each base station in the set of base stations B1, B2, B3, B4, B5, B6, B7 and B8 respectively in the UWB.

Namely, the UWB allows for the transmission of large amounts of signal energy without interfering with conventional narrowband and carrier wave transmission in the same frequency band. Additionally, the UWB offers data communication capability while using extremely little energy and enabling accurate location.

It is generally advantageous if the central unit CU is configured to effect the above-described procedure in an automatic manner by executing a computer program 417. Therefore, the central unit CU may include a memory unit 416, i.e. non-volatile data carrier, storing the computer program 417, which, in turn, contains software for making processing circuitry in the form of at least one processor 415 in the central unit CU execute the actions mentioned in this disclosure when the computer program 417 is run on the at least one processor 415.

Figure 5 shows a block diagram of the base station B1 according to one embodiment of the invention. It is generally advantageous if the base station B1 is configured to effect the above-described procedure in an automatic manner by executing a computer program 517. Therefore, the base station B1 may include a memory unit 516, i.e. non-volatile data carrier, storing the computer program 517, which, in turn, contains software for making processing circuitry in the form of at least one processor 515 in the base station B1 execute the actions mentioned in this disclosure when the computer program 517 is run on the at least one processor 515.

Figure 6 shows a block diagram of a mobile unit U1 according to one embodiment of the invention. It is generally advantageous if the mobile unit U1 is configured to effect the above-described procedure in an automatic manner by executing a computer program 617. Therefore, the mobile unit U1 may include a memory unit 616, i.e. non-volatile data carrier, storing the computer program 617, which, in turn, contains software for making processing circuitry in the form of at least one processor 615 in the mobile unit U1 execute the actions mentioned in this disclosure when the computer program 617 is run on the at least one processor 615.

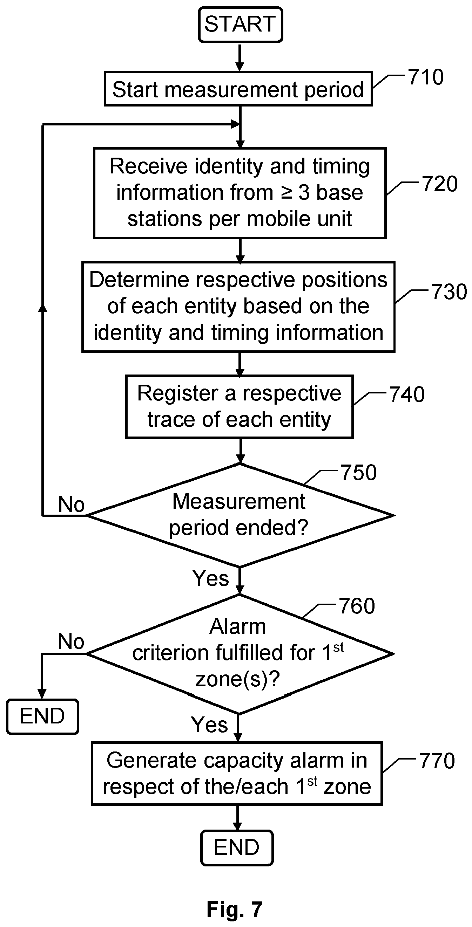

In order to sum up, and with reference to the flow diagram in Figure 7, we will now describe the computer-implemented positioning method according to the invention.

In a first step 710, a measurement period is started.

Then, in a step 720, identity and timing information are received from at least three base stations via at least one transmission line. The base stations, in turn, are arranged to receive radio messages from mobile units, each of which is carried by a respective entity in a set of entities moving in an area and repeatedly transmits a radio message including the identity information.

Thereafter, a step 730 determines a respective position in the area of each entity in the set of entities based on the identity and timing information received in step 720.

Subsequently, step 740 register respective positions of the entities in the set of entities in the form of a respective trace for each mobile unit.

Then, a step 750 tests if the measurement period has ended; and if so, a step 760 follows. Otherwise, the procedure loops back to step 720.

Step 760 checks if an alarm criterion is fulfilled. The alarm criterion is considered to be fulfilled if (i) a first predefined number of the traces are interrupted during a first threshold interval, and (ii) the first predefined number of traces are interrupted in at least one first zone of the area, which at least one first zone exceeds a first threshold size.

If the alarm criterion is considered to be fulfilled, a step 770 follows, and otherwise the procedure ends.

In step 770, a capacity alarm is generated with respect to each of the at least one first zone (Z1). Thereafter, the procedure ends.

The process steps described with reference to Figure 7 may be controlled by means of a programmed processor. Moreover, although the embodiments of the invention described above with reference to the drawings comprise processor and processes performed in at least one processor, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The program may either be a part of an operating system, or be a separate application. The carrier may be any entity or device capable of carrying the program. For example, the carrier may comprise a storage medium, such as a Flash memory, a ROM (Read Only Memory), for example a DVD (Digital Video/Versatile Disk), a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal, which may be conveyed, directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

Variations to the disclosed embodiments can be understood and effected by those skilled in the art in practicing the claimed invention, from a study of the drawings, the disclosure, and the appended claims.

The term "comprises/comprising" when used in this specification is taken to specify the presence of stated features, integers, steps or components. The term does not preclude the presence or addition of one or more additional elements, features, integers, steps or components or groups thereof. The indefinite article "a" or "an" does not exclude a plurality. Any reference signs in the claims should not be construed as limiting the scope.

The invention is not restricted to the described embodiments in the figures, but may be varied freely within the scope of the claims.

## Claims

1. A positioning system comprising:
a central unit (CU) configured to receive identity and timing information; and based thereon determine a respective position in an area (A) of each entity in a set of entities, wherein each entity carries a respective mobile unit (U1) repeatedly transmitting a radio message (M1) including the identity information; and
a set of base stations (B1, B2, B3, B4, B5, B6, B7, B8) comprising at least three base stations, each of which is arranged to receive the radio messages (M1) from the mobile units (U1) in the area (A); and based thereon, forward the identity and timing information to the central unit (CU) via at least one transmission line,
wherein the central unit (CU) is further configured to:
register, during a measurement period (T_{M}), respective positions of the entities in the set of entities in the form of a respective trace (TR1) for each mobile unit (U1),
**characterized in that** the central unit (CU) is further configured to:
check if an alarm criterion is fulfilled, which alarm criterion is considered to be fulfilled if, during the measurement period (T_{M}):
a first predefined number (I_{TH}) of the traces (TR1) are interrupted during a first threshold interval (T_{TH}), and
the first predefined number (I_{TH}) of traces (TR1) are interrupted in a first zone (Z1) of the area (A), which first zone exceeds a first threshold size (A_{TH});
and if the alarm criterion is considered to be fulfilled generate a capacity alarm (CA(Z1)) with respect to the first zone (Z1).

2. The positioning system according to claim 1, wherein the central unit (CU) is further configured to indicate a location for a new base station (BN) to increase a capacity of the positioning system in the first zone (Z1), which location is at a geometrical middle point (MP) between a first base station (B1) and a second base station (B2) in the set of base stations, which first and second base stations (B1, B2) are located closer to the first zone (Z1) than any other base station in the set of base stations.

3. The positioning system according to claim 2, wherein the central unit (CU) is further configured to:
check if an overcapacity criterion is fulfilled, which overcapacity criterion is considered to be fulfilled if, during the measurement period (T_{M}):
less than a second predefined number of the traces (TR1) cross a second zone (Z2) of the area (A), and
none of the second predefined number of the traces (TR1) is interrupted in the second zone (Z2), which second zone exceeds a second threshold size; and if the overcapacity criterion is considered to be fulfilled
generate an overcapacity indicator (OC(Z2)) with respect to the second zone (Z2).

4. The positioning system according to claim 3, wherein the central unit (CU) is further configured to identify one of the base stations in the set of base stations (B1, B2, B3, B4, B5, B6, B7, B8) as a candidate base station (B5) to be removed from the positioning system, which candidate base station (B5) is a base station in the set of base stations being located closer to the second zone (Z2) than any other base station in the set of base stations.

5. The positioning system according to any one of the preceding claims, wherein each mobile unit (U1) in the set of mobile units is configured to transmit the radio message (M1) to each base station in the set of base stations (B1, B2, B3, B4, B5, B6, B7, B8) on the ultra-wide band.

6. The positioning system according to any one of the preceding claims, wherein the entities in a set of entities are livestock animals.

7. A computer-implemented method, which is performed in at least one processor (615) of a positioning system and comprises:
receiving, via at least one transmission line, identity and timing information from at least three base stations (B1, B2, B3) in a set of base stations arranged to receive radio messages (M1) from mobile units (U1) each of which is carried by a respective entity in a set of entities and repeatedly transmits a radio message (M1) including the identity information, which entities move in an area (A), and which base stations forward the identity and timing information; and
determining, based on the identity and timing information, a respective position in the area (A) of each entity in the set of entities;
registering, during a measurement period (T_{M}), respective positions of the entities in the set of entities in the form of a respective trace (TR1) for each mobile unit (U1); **characterized by**:
checking if an alarm criterion is fulfilled, which alarm criterion is considered to be fulfilled if, during the measurement period (T_{M}):
a first predefined number (I_{TH}) of the traces (TR1) are interrupted during a first threshold interval (T_{TH}), and
the first predefined number (I_{TH}) of traces (TR1) are interrupted in a first zone (Z1) of the area (A), which first zone exceeds a first threshold size (A_{TH});
and if the alarm criterion is considered to be fulfilled generating a capacity alarm (CA(Z1)) with respect to the first zone (Z1).

8. The method according to claim 7, further comprising:
indicating a location for a new base station (BN) to increase a capacity of the positioning system in the first zone (Z1), which location is at a geometrical middle point (MP) between a first base station (B1) and a second base station (B2) in the set of base stations, which first and second base stations (B1, B2) are located closer to the first zone (Z1) than any other base station in the set of base stations.

9. The method according to claim 8, further comprising:
checking if an overcapacity criterion is fulfilled, which overcapacity criterion is considered to be fulfilled if, during the measurement period (T_{M}):
less than a second predefined number of the traces (TR1) cross a second zone (Z2) of the area (A), and
none of the second predefined number of the traces (TR1) is interrupted in the second zone (Z2), which second zone exceeds a second threshold size; and if the overcapacity criterion is considered to be fulfilled
generating an overcapacity indicator (OC(Z2)) with respect to the second zone (Z2).

10. The method according to claim 9, further comprising:
identifying one of the base stations in the set of base stations (B1, B2, B3, B4, B5, B6, B7, B8) as a candidate base station (B5) to be removed from the positioning system, which candidate base station (B5) is a base station in the set of base stations being located closer to the second zone (Z2) than any other base station in the set of base stations.

11. The method according to any one of the claims 7 to 10, comprising:
transmitting the radio message (M1) from each mobile unit (U1) in the set of mobile units to each base station in the set of base stations (B1, B2, B3, B4, B5, B6, B7, B8) on the ultra-wide band.

12. The method according to any one of the claims 7 to 11, wherein the entities in a set of entities are livestock animals.

13. A computer program (417, 517, 617) loadable into a non-volatile data carrier (416, 516, 616) communicatively connected to a processor (415, 515, 615) of a positioning system, the computer program (417, 517, 617) comprising software for executing the method according to any of the claims 7 to 12 when the computer program (417, 517, 617) is run on the processor (415, 515, 615).

14. A non-volatile data carrier (416, 516, 616) containing the computer program (417, 517, 617) of the claim 13.

## Patentansprüche

1. Positionierungssystem, umfassend:
eine Zentraleinheit (CU), die konfiguriert ist, um Identitäts- und Zeitinformationen zu empfangen; und um darauf basierend eine jeweilige Position in einem Bereich (A) jeder Entität in einem Satz von Entitäten zu bestimmen, wobei jede Entität eine jeweilige mobile Einheit (U1) trägt, die wiederholt eine Funknachricht (M1) überträgt, die die Identitätsinformationen einschließt; und
einen Satz von Basisstationen (B1, B2, B3, B4, B5, B6, B7, B8), der mindestens drei Basisstationen umfasst, von denen jede eingerichtet ist, um die Funknachrichten (M1) von den mobilen Einheiten (U1) in dem Bereich (A) zu empfangen; und um darauf basierend die Identitäts- und Zeitinformationen über mindestens eine Übertragungsleitung an die Zentraleinheit (CU) weiterzuleiten,
wobei die Zentraleinheit (CU) konfiguriert ist zum:
Registrieren, während einer Messzeit (T_{M}), von jeweiligen Positionen der Entitäten in dem Satz von Entitäten in Form einer jeweiligen Spur (TR1) für jede mobile Einheit (U1),
**dadurch gekennzeichnet, dass** die Zentraleinheit (CU) ferner konfiguriert ist zum:
Prüfen, ob ein Alarmkriterium erfüllt ist, wobei das Alarmkriterium als erfüllt gilt, wenn während der Messzeit (T_{M}):
eine erste vorgegebene Anzahl (I_{TH}) der Spuren (TR1) während eines ersten Schwellenwertintervalls (T_{TH}), unterbrochen wird, und
die erste vorgegebene Anzahl (I_{TH}) von Spuren (TR1) in einer ersten Zone (Z1) des Bereichs (A) unterbrochen ist, wobei die erste Zone eine erste Schwellengröße (A_{TH}); überschreitet;
und wenn das Alarmkriterium als erfüllt angesehen wird, Erzeugen eines Kapazitätsalarms (CA(Z1)) in Bezug auf die erste Zone (Z1).

2. Positionierungssystem nach Anspruch 1, wobei die Zentraleinheit (CU) ferner konfiguriert ist, um einen Standort für eine neue Basisstation (BN) anzugeben, um eine Kapazität des Positionierungssystems in der ersten Zone (Z1) zu erhöhen, wobei sich dieser Standort an einem geometrischen Mittelpunkt (MP) zwischen einer ersten Basisstation (B1) und einer zweiten Basisstation (B2) in dem Satz von Basisstationen befindet, wobei die erste und die zweite Basisstation (B1, B2) näher an der ersten Zone (Z1) angeordnet sind als jede andere Basisstation in dem Satz von Basisstationen.

3. Positionierungssystem nach Anspruch 2, wobei die Zentraleinheit (CU) ferner konfiguriert ist zum:
Prüfen, ob ein Überkapazitätskriterium erfüllt ist, wobei das Überkapazitätskriterium als erfüllt gilt, wenn während der Messzeit (T_{M}):
weniger als eine zweite vorgegebene Anzahl der Spuren (TR1) eine zweite Zone (Z2) des Bereichs (A) kreuzen, und
keine der zweiten vorgegebenen Anzahl der Spuren (TR1) in der zweiten Zone (Z2) unterbrochen ist, wobei die zweite Zone eine zweite Schwellengröße überschreitet; und wenn das Überkapazitätskriterium als erfüllt angesehen wird, Erzeugen eines Überkapazitätsindikators (OC(Z2)) in Bezug auf die zweite Zone (Z2).

4. Positionierungssystem nach Anspruch 3, wobei die Zentraleinheit (CU) ferner konfiguriert ist, um eine der Basisstationen in dem Satz von Basisstationen (B1, B2, B3, B4, B5, B6, B7, B8) als eine aus dem Positionierungssystem zu entfernende Kandidaten-Basisstation (B5) zu identifizieren, wobei diese Kandidaten-Basisstation (B5) eine Basisstation in dem Satz von Basisstationen ist, die näher an der zweiten Zone (Z2) angeordnet ist als jede andere Basisstation in dem Satz von Basisstationen.

5. Positionierungssystem nach einem der vorstehenden Ansprüche, wobei jede mobile Einheit (U1) in dem Satz von mobilen Einheiten konfiguriert ist, um die Funknachricht (M1) an jede Basisstation in dem Satz von Basisstationen (B1, B2, B3, B4, B5, B6, B7, B8) auf dem Ultrabreitband zu übertragen.

6. Positionierungssystem nach einem der vorstehenden Ansprüche, wobei die Entitäten in einem Satz von Entitäten Nutztiere sind.

7. Computerimplementiertes Verfahren, das in mindestens einem Prozessor (615) eines Positionierungssystems durchgeführt wird und umfasst:
Empfangen, über mindestens eine Übertragungsleitung, von Identitäts- und Zeitinformationen von mindestens drei Basisstationen (B1, B2, B3) in einem Satz von Basisstationen, die eingerichtet sind, um Funknachrichten (M1) von mobilen Einheiten (U1) zu empfangen, von denen jede von einer jeweiligen Entität in einem Satz von Entitäten getragen wird und wiederholt eine Funknachricht (M1) überträgt, die die Identitätsinformationen einschließt, wobei sich die Entitäten in einem Bereich (A) bewegen und wobei die Basisstationen die Identitäts- und Zeitinformationen weiterleiten; und
Bestimmen, basierend auf der Identitäts- und Zeitinformation, einer jeweiligen Position in dem Bereich (A) jeder Entität in dem Satz von Entitäten:
Registrieren, während einer Messzeit (T_{M}), jeweiliger Positionen der Entitäten in dem Satz von Entitäten in Form einer jeweiligen Spur (TR1) für jede mobile Einheit (U1); **gekennzeichnet durch:**
Prüfen, ob ein Alarmkriterium erfüllt ist, wobei das Alarmkriterium als erfüllt gilt, wenn während der Messzeit (T_{M}):
eine erste vorgegebene Anzahl (I_{TH}) der Spuren (TR1) während eines ersten Schwellenwertintervalls (T_{TH}), unterbrochen wird, und
die erste vorgegebene Anzahl (I_{TH}) von Spuren (TR1) in einer ersten Zone (Z1) des Bereichs (A) unterbrochen ist, wobei die erste Zone eine erste Schwellengröße (A_{TH}); überschreitet;
und wenn das Alarmkriterium als erfüllt angesehen wird, Erzeugen eines Kapazitätsalarms (CA(Z1)) in Bezug auf die erste Zone (Z1).

8. Verfahren nach Anspruch 7, ferner umfassend:
Angeben eines Standorts für eine neue Basisstation (BN), um eine Kapazität des Positionierungssystems in der ersten Zone (Z1) zu erhöhen, wobei sich der Standort an einem geometrischen Mittelpunkt (MP) zwischen einer ersten Basisstation (B1) und einer zweiten Basisstation (B2) in dem Satz von Basisstationen befindet, wobei die erste und die zweite Basisstation (B1, B2) näher an der ersten Zone (Z1) angeordnet sind als jede andere Basisstation in dem Satz von Basisstationen.

9. Verfahren nach Anspruch 8, ferner umfassend:
Prüfen, ob ein Überkapazitätskriterium erfüllt ist, wobei das Überkapazitätskriterium als erfüllt gilt, wenn während der Messzeit (T_{M}):
weniger als eine zweite vorgegebene Anzahl der Spuren (TR1) eine zweite Zone (Z2) des Bereichs (A) kreuzen, und
keine der zweiten vorgegebenen Anzahl der Spuren (TR1) in der zweiten Zone (Z2) unterbrochen ist, wobei die zweite Zone eine zweite Schwellengröße überschreitet; und wenn das Überkapazitätskriterium als erfüllt angesehen wird, Erzeugen eines Überkapazitätsindikators (OC(Z2)) in Bezug auf die zweite Zone (Z2).

10. Verfahren nach Anspruch 9, ferner umfassend:
Identifizieren einer der Basisstationen in dem Satz von Basisstationen (B1, B2, B3, B4, B5, B6, B7, B8) als eine Kandidaten-Basisstation (B5), die aus dem Positionierungssystem zu entfernen ist, wobei die Kandidaten-Basisstation (B5) eine Basisstation in dem Satz von Basisstationen ist, die näher an der zweiten Zone (Z2) angeordnet ist als jede andere Basisstation in dem Satz von Basisstationen.

11. Verfahren nach einem der Ansprüche 7 bis 10, umfassend:
Übertragen der Funknachricht (M1) von jeder mobilen Einheit (U1) in dem Satz von mobilen Einheiten an jede Basisstation in dem Satz von Basisstationen (B1, B2, B3, B4, B5, B6, B7, B8) auf dem Ultrabreitband.

12. Verfahren nach einem der Ansprüche 7 bis 11, wobei die Entitäten in einem Satz von Entitäten Nutztiere sind.

13. Computerprogramm (417, 517, 617), ladbar in einen nichtflüchtigen Datenträger (416, 516, 616), der kommunikativ mit einem Prozessor (415, 515, 615) eines Positionierungssystems verbunden ist, wobei das Computerprogramm (417, 517, 617) Software zum Ausführen des Verfahrens nach einem der Ansprüche 7 bis 12 umfasst, wenn das Computerprogramm (417, 517, 617) auf dem Prozessor (415, 515, 615) ausgeführt wird.

14. Nichtflüchtiger Datenträger (416, 516, 616), der das Computerprogramm (417, 517, 617) nach Anspruch 13 enthält.

## Revendications

1. Système de positionnement comprenant :
une unité centrale (CU) configurée pour recevoir des informations d'identité et de synchronisation ; et sur la base de celles-ci, déterminer une position respective dans une région (A) de chaque entité dans un ensemble d'entités, dans lequel chaque entité porte une unité mobile (U1) respective qui transmet de manière répétée un message radio (M1) comportant les informations d'identité ; et
un ensemble de stations de base (B1, B2, B3, B4, B5, B6, B7, B8) comprenant au moins trois stations de base, dont chacune est disposée pour recevoir les messages radio (M1) à partir des unités mobiles (U1) dans la région (A) ; et sur la base de ceux-ci, transmettre les informations d'identité et de synchronisation à l'unité centrale (CU) par l'intermédiaire d'au moins une ligne de transmission,
dans lequel l'unité centrale (CU) est en outre configurée pour :
enregistrer, pendant une période de mesure (T_{M}), des positions respectives des entités dans l'ensemble d'entités sous la forme d'une trace (TR1) respective pour chaque unité mobile (U1),
**caractérisé en ce que** l'unité centrale (CU) est en outre configurée pour :
vérifier si un critère d'alarme est rempli, le critère d'alarme est considéré comme rempli si, pendant la période de mesure (T_{M}) :
un premier nombre prédéfini (I_{TH}) de traces (TR1) sont interrompues pendant un premier intervalle seuil (T_{TH}), et
le premier nombre prédéfini (I_{TH}) de traces (TR1) sont interrompues dans une première zone (Z1) de la région (A), la première zone dépasse une première taille seuil (A_{TH}) ;
et si le critère d'alarme est considéré comme rempli, générer une alarme de capacité (CA(Z1)) par rapport à la première zone (Z1).

2. Système de positionnement selon la revendication 1, dans lequel l'unité centrale (CU) est en outre configurée pour indiquer un emplacement pour une nouvelle station de base (BN) afin d'augmenter une capacité du système de positionnement dans la première zone (Z1), l'emplacement est situé au niveau d'un point médian (MP) géométrique entre une première station de base (B1) et une seconde station de base (B2) dans l'ensemble de stations de base, les première et seconde stations de base (B1, B2) sont situées plus près de la première zone (Z1) que toute autre station de base dans l'ensemble de stations de base.

3. Système de positionnement selon la revendication 2, dans lequel l'unité centrale (CU) est en outre configurée pour :
vérifier si un critère de surcapacité est rempli, le critère de surcapacité est considéré comme rempli si, pendant la période de mesure (T_{M}) :
moins d'un second nombre prédéfini de traces (TR1) traversent une seconde zone (Z2) de la région (A), et
aucune du second nombre prédéfini des traces (TR1) n'est interrompue dans la seconde zone (Z2), la seconde zone dépasse une seconde taille seuil ; et si le critère de surcapacité est considéré comme rempli, générer un indicateur de surcapacité (OC(Z2)) par rapport à la seconde zone (Z2).

4. Système de positionnement selon la revendication 3, dans lequel l'unité centrale (CU) est en outre configurée pour identifier l'une des stations de base dans l'ensemble de stations de base (B1, B2, B3, B4, B5, B6, B7, B8) comme station de base candidate (B5) devant être retirée du système de positionnement, la station de base candidate (B5) est une station de base dans l'ensemble de stations de base, qui est située plus près de la seconde zone (Z2) que toute autre station de base dans l'ensemble de stations de base.

5. Système de positionnement selon l'une quelconque des revendications précédentes, dans lequel chaque unité mobile (U1) dans l'ensemble d'unités mobiles est configurée pour transmettre le message radio (M1) à chaque station de base dans l'ensemble de stations de base (B1, B2, B3, B4, B5, B6, B7, B8) sur la bande ultra-large.

6. Système de positionnement selon l'une quelconque des revendications précédentes, dans lequel les entités dans un ensemble d'entités sont des animaux d'élevage.

7. Procédé mis en œuvre par ordinateur, qui est exécuté dans au moins un processeur (615) d'un système de positionnement et comprend :
la réception, par l'intermédiaire d'au moins une ligne de transmission, d'informations d'identité et de synchronisation à partir d'au moins trois stations de base (B1, B2, B3) dans un ensemble de stations de base disposées pour recevoir des messages radio (M1) à partir d'unités mobiles (U1) dont chacune est portée par une entité respective dans un ensemble d'entités et transmet de manière répétée un message radio (M1) comportant les informations d'identité, les entités se déplacent dans une région (A), et les stations de base transfèrent les informations d'identité et de synchronisation ; et
la détermination, sur la base des informations d'identité et de synchronisation, d'une position respective dans la région (A) de chaque entité dans l'ensemble d'entités :
l'enregistrement, pendant une période de mesure (T_{M}), de positions respectives des entités dans l'ensemble d'entités sous la forme d'une trace (TR1) respective pour chaque unité mobile (U1) ; **caractérisé par :**
la vérification du fait qu'un critère d'alarme est rempli, le critère d'alarme est considéré comme rempli si, pendant la période de mesure (T_{M}) :
un premier nombre prédéfini (I_{TH}) de traces (TR1) sont interrompues pendant un premier intervalle seuil (T_{TH}), et
le premier nombre prédéfini (I_{TH}) de traces (TR1) sont interrompues dans une première zone (Z1) de la région (A), la première zone dépasse une première taille seuil (A_{TH}) ;
et si le critère d'alarme est considéré comme rempli, la génération d'une alarme de capacité (CA(Z1)) par rapport à la première zone (Z1).

8. Procédé selon la revendication 7, comprenant en outre :
l'indication d'un emplacement pour une nouvelle station de base (BN) afin d'augmenter une capacité du système de positionnement dans la première zone (Z1), l'emplacement est situé au niveau d'un point médian (MP) géométrique entre une première station de base (B1) et une seconde station de base (B2) dans l'ensemble de stations de base, les première et seconde stations de base (B1, B2) sont situées plus près de la première zone (Z1) que toute autre station de base dans l'ensemble de stations de base.

9. Procédé selon la revendication 8, comprenant en outre :
la vérification du fait qu'un critère de surcapacité est rempli, le critère de surcapacité est considéré comme rempli si, pendant la période de mesure (T_{M}) :
moins d'un second nombre prédéfini de traces (TR1) traversent une seconde zone (Z2) de la région (A), et
aucune du second nombre prédéfini des traces (TR1) n'est interrompue dans la seconde zone (Z2), la seconde zone dépasse une seconde taille seuil ; et si le critère de surcapacité est considéré comme rempli, la génération d'un indicateur de surcapacité (OC(Z2)) par rapport à la seconde zone (Z2).

10. Procédé selon la revendication 9, comprenant en outre :
l'identification de l'une des stations de base dans l'ensemble de stations de base (B1, B2, B3, B4, B5, B6, B7, B8) comme station de base candidate (B5) devant être retirée du système de positionnement, la station de base candidate (B5) est une station de base dans l'ensemble de stations de base, qui est située plus près de la seconde zone (Z2) que toute autre station de base dans l'ensemble de stations de base.

11. Procédé selon l'une quelconque des revendications 7 à 10, comprenant :
la transmission du message radio (M1) à partir de chaque unité mobile (U1) dans l'ensemble d'unités mobiles à chaque station de base dans l'ensemble de stations de base (B1, B2, B3, B4, B5, B6, B7, B8) sur la bande ultra-large.

12. Procédé selon l'une quelconque des revendications 7 à 11, dans lequel les entités dans un ensemble d'entités sont des animaux d'élevage.

13. Programme informatique (417, 517, 617) pouvant être chargé dans un support de données non volatil (416, 516, 616) connecté en communication à un processeur (415, 515, 615) d'un système de positionnement, le programme informatique (417, 517, 617) comprenant un logiciel destiné à exécuter le procédé selon l'une quelconque des revendications 7 à 12 lorsque le programme informatique (417, 517, 617) est exécuté sur le processeur (415, 515, 615).

14. Support de données non volatil (416, 516, 616) contenant le programme informatique (417, 517, 617) selon la revendication 13.
